(19) Europäisches Patentamt
European Patent Office
Office européen des brevets

(11) **EP 3 407 555 B1**

(12) **EUROPEAN PATENT SPECIFICATION**

(45) Date of publication and mention
of the grant of the patent:
**02.04.2025 Bulletin 2025/14**

(21) Application number: **17173041.9**

(22) Date of filing: **26.05.2017**

(51) International Patent Classification (IPC):
**H04L 27/26** *(2006.01)*

(52) Cooperative Patent Classification (CPC):
**H04L 27/2668; H04L 27/2657; H04L 27/2675;
H04L 27/2686**

(54) **DETECTION DEVICE AND CORRELATION RECEIVER FOR CELL-ID DETECTION**

DETEKTIONSVORRICHTUNG UND KORRELATIONSEMPFÄNGER ZUR ZELLEN-ID-DETEKTION

DISPOSITIF DE DÉTECTION ET RÉCEPTEUR À CORRÉLATION POUR LA DÉTECTION
D'IDENTIFIANT DE CELLULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.11.2018 Bulletin 2018/48**

(73) Proprietor: **Intel Corporation
Santa Clara, CA 95054 (US)**

(72) Inventors:
• **HESSAMIAN-ALINEJAD, Arjang**
81829 München (DE)
• **SCHERB, Ansgar**
91207 Nürnberg (DE)
• **GUNZELMANN, Bertram**
86343 Königsbrunn (DE)

(74) Representative: **Viering, Jentschura & Partner
mbB**
**Patent- und Rechtsanwälte
Am Brauhaus 8
01099 Dresden (DE)**

(56) References cited:
**WO-A2-2007/136931**

• **KROLL HARALD ET AL: "Maximum-Likelihood
Detection for Energy-Efficient Timing
Acquisition in NB-IoT", 2017 IEEE WIRELESS
COMMUNICATIONS AND NETWORKING
CONFERENCE WORKSHOPS (WCNCW), IEEE,
19 March 2017 (2017-03-19), pages 1 - 5,
XP033093201, DOI: 10.1109/
WCNCW.2017.7919084**
• **INTEL CORPORATION: "On NB-IoT Secondary
Synchronization Signal Design", vol. RAN WG1,
no. St Julian's, Malta; 20160215 - 20160219, 6
February 2016 (2016-02-06), XP051064170,
Retrieved from the Internet <URL:http://
www.3gpp.org/ftp/tsg_ran/WG1_RL1/TSGR1_84/
Docs/> [retrieved on 20160206]**
• **INTEL CORPORATION: "On device complexity
for NB-IoT", vol. RAN WG1, no. Anaheim, USA;
20151116 - 20151120, 7 November 2015
(2015-11-07), XP051042062, Retrieved from the
Internet <URL:http://www.3gpp.org/ftp/tsg_ran/
WG1_RL1/TSGR1_83/Docs/> [retrieved on
20151107]**

**Description**

**FIELD**

The disclosure relates to a detection device and method for detecting a specific prototype sequence, in particular a prototype sequence associated with a cell ID of a radio cell. The disclosure further relates to a correlation receiver for detecting a Narrowband secondary synchronization signal (N-SSS), in particular for cell ID detection in an Internet-of-Things (IoT) receiver. The disclosure further relates to a low-cost N-SSS detection algorithm for NB-IoT receivers.

**BACKGROUND**

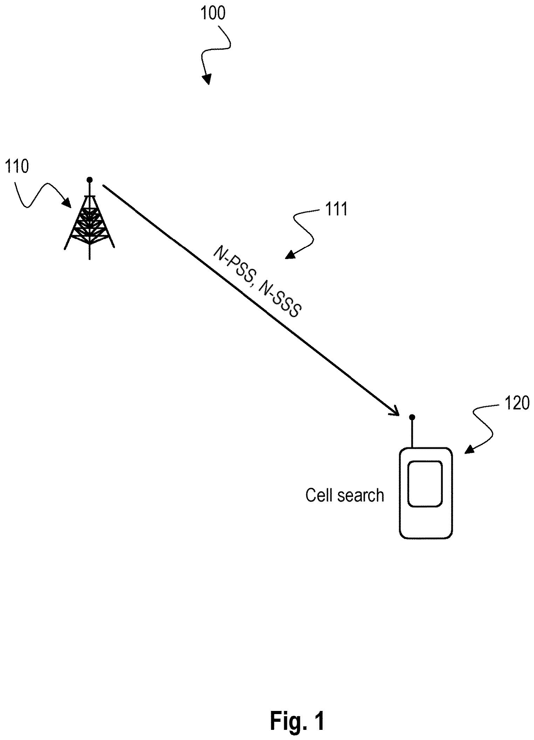

In exemplary mobile communication systems 100 such as Narrowband Internet of Things (NB-IoT) as depicted in Fig. 1, the mobile communication device 120 performs cell search for detecting a suitable radio cell 110. The radio cell 110 transmits a synchronization signal 111, e.g. N-PSS and N-SSS in NB-IoT, which can be detected by the mobile device 120 for connecting to the radio cell 110. In NB-IoT the N-PSS (Narrowband primary synchronization signal) and the (Narrowband secondary synchronization signal) N-SSS are used for cell search. The N-PSS is used for the detection of the correct cell timing (subframe and OFDM symbol timing) and initial carrier frequency offset estimation. The N-SSS is used for the detection of the cell-ID and the 80 ms cell timing, i.e. the subframe number within an 80 ms transmission interval. The WO 2007/136931 A1 discloses a method and apparatus for fast cell search, wherein a remote unit that is designed to identify a sequence index and a unique circular shift index comprises an OFDM demodulator, a demultiplexer, a channel estimator, a sequence index and circular shift index detector and a base identifier.

In NB-IoT battery resources of the mobile devices are limited. Hence, there is a need to provide a solution for efficiently reducing the computational complexity for performing cell search, in particular for detecting the N-SSS synchronization signal.

**SUMMARY**

A detection device is defined according to independent claim 1. Other aspects of the detection device are defined by dependent claims 2 to 10. A method for detecting a specific prototype sequence is defined according to independent claim 11. Another aspect of the method is defined by dependent claim 12. Another aspect is defined by a computer readable non-transitory medium as in claim 13.

The scope of the invention is defined only by the appended claims.

**EXEMPLARY ASPECTS**

The following exemplary aspects 1 to 28 pertain to aspects of the disclosure.

Various aspects are directed to a detection device including: a receiver configured to receive a received sequence, wherein the received sequence is a Narrowband Secondary Synchronization Signal, N-SSS; and a processor configured to: descramble the received sequence with a predefined number of known scrambling sequences, determine a sequence of cross spectral densities based on the descrambled received sequence and a predefined number of known prototype sequences, demultiplex each of the cross spectral densities into four streams of the same length, accumulate the samples corresponding to each of the streams into four accumulated samples, multiplex the four accumulated samples to a sequence of aliased cross spectral densities, determine an inverse frequency transform of the sequence of aliased cross spectral densities at lags corresponding to a predefined number of known cyclic shifts, and detect a specific prototype sequence and its cyclic shift based on the inverse frequency transform of the aliased cross spectral densities. The detection device mentioned in this paragraph provides a first exemplary aspect.

The predefined number of known cyclic shifts may be from a set of equidistant cyclic shifts. The features mentioned in this paragraph in combination with the first exemplary aspect provide a second exemplary aspect.

The processor may be configured to determine the inverse frequency transform of the sequence of cross spectral densities only at the lags corresponding to the predefined number of known equidistant cyclic shifts. The features mentioned in this paragraph in combination with the first exemplary aspect or with the second exemplary aspect provide a third exemplary aspect.

The N-SSS sequence may be transmitted every 20 ms in subframe number 9 of every even numbered radio frame. The features mentioned in this paragraph in combination with any one of the exemplary aspects one to three provide a fourth exemplary aspect.

Each prototype sequence may include a scrambled base sequence where the base sequence is a Zadoff-Chu sequence, or each prototype sequence may include a base sequence where the base sequence is a Zadoff-Chu sequence. The features mentioned in this paragraph in combination with any one of the exemplary aspects one to four provide a fifth exemplary aspect.

The predefined number of base sequences and the predefined number of scrambling sequences may be associated with a cell ID of a radio cell, or the predefined number of base sequences may be associated with a cell ID of a radio cell. The features mentioned in this paragraph in combination with any one of the exemplary aspects one to five provide a sixth exemplary aspect.

The processor may be configured to detect the specific prototype sequence and its cyclic shift based on detecting a peak in an output of the inverse frequency transform. The features mentioned in this paragraph in combination with any one of the exemplary aspects one to six provide a seventh exemplary aspect.

The processor may be configured to detect the specific prototype sequence and its cyclic shift based on detecting a peak in accumulated outputs of the inverse frequency transform. The features mentioned in this paragraph in combination with any one of the exemplary aspects one to seven provide an eighth exemplary aspect.

The inverse frequency transform may be based on a 4-point IFFT or on a 4-point IDFT. The features mentioned in this paragraph in combination with any one of the exemplary aspects one to eight provide a ninth exemplary aspect.

A predefined number of known base sequences may be from a set of 126 base sequences, the predefined number of known scrambling sequences may be from a set of 4 scrambling sequences, and the predefined number of known cyclic shifts may be from a set of 4 cyclic shifts. Alternatively, the predefined number of known prototype sequences may be from a set of 504 prototype sequences and a predefined number of known phase shifts may be from a set of 4 phase shifts. The features mentioned in this paragraph in combination with any one of the exemplary aspects one to nine provide a tenth exemplary aspect.

The receiver may be configured to receive a radio signal including a plurality of Orthogonal Frequency Division Multiplex (OFDM) symbols carrying the received sequence. The features mentioned in this paragraph in combination with any one of the exemplary aspects one to ten provide an eleventh exemplary aspect.

The receiver may be configured to receive the received sequence in an oversampled version. The features mentioned in this paragraph in combination with any one of the exemplary aspects one to eleven provide a twelfth exemplary aspect.

The receiver may be configured to receive the received sequence at a bandwidth corresponding to a multiple of 15 kHz. The features mentioned in this paragraph in combination with any one of the exemplary aspects one to twelve provide a thirteenth exemplary aspect.

The receiver may include a Narrowband Internet of Things (NB-IoT) receiver. The features mentioned in this paragraph in combination with any one of the exemplary aspects one to thirteen provide a fourteenth exemplary aspect.

A method for detecting a specific prototype sequence may include: receiving a received sequence, wherein the received sequence is a Narrowband Secondary Synchronization Signal, N-SSS; descrambling the received sequence with a predefined number of known scrambling sequences; determining a sequence of cross spectral densities based on the descrambled received sequence and a predefined number of known prototype sequences; demultiplexing each of the cross spectral densities into four streams of the same length; accumulating the samples corresponding to each of the streams into four accumulated samples; multiplexing the four accumulated samples to a sequence of aliased cross spectral densities; determining an inverse frequency transform of the sequence of aliased cross spectral densities at lags corresponding to a predefined number of known cyclic shifts; and detecting a specific prototype sequence and its cyclic shift based on the inverse frequency transform of the aliased cross spectral densities. The method mentioned in this paragraph provides a fifteenth exemplary aspect.

The predefined number of known cyclic shifts may be from a set of equidistant cyclic shifts. The features mentioned in this paragraph in combination with the fifteenth exemplary aspect provide a sixteenth exemplary aspect.

The method may include determining the inverse frequency transform of the sequence of cross spectral densities only at the lags corresponding to the predefined number of known equidistant cyclic shifts. The features mentioned in this paragraph in combination with the fifteenth exemplary aspect or with the sixteenth exemplary aspect provide a seventeenth exemplary aspect.

The N-SSS sequence may be transmitted every 20 ms in subframe number 9 of every even numbered radio frame. The features mentioned in this paragraph in combination with any one of the exemplary aspects fifteen to seventeen provide an eighteenth exemplary aspect.

Each prototype sequence may include a scrambled base sequence where the base sequence is a Zadoff-Chu sequence. Alternatively, each prototype sequence may include a base sequence where the base sequence is a Zadoff-Chu sequence. The features mentioned in this paragraph in combination with any one of the exemplary aspects fifteen to eighteen provide a nineteenth exemplary aspect.

The predefined number of base sequences and the predefined number of scrambling sequences may be associated with a cell ID of a radio cell, or the predefined number of base sequences may be associated with a cell ID of a radio cell. The features mentioned in this paragraph in combination with any one of the exemplary aspects fifteen to nineteen provide a twentieth exemplary aspect.

The method may include detecting the specific prototype sequence and its cyclic shift based on detecting a peak in an output of the inverse frequency transform. The features mentioned in this paragraph in combination with any one of the exemplary aspects fifteen to twenty provide a twenty-first exemplary aspect.

The method may include detecting the specific prototype sequence and its cyclic shift based on detecting a peak in accumulated outputs of the inverse frequency transform. The features mentioned in this paragraph in combination with any one of the exemplary aspects fifteen to twenty-one provide a twenty-second exemplary aspect.

The inverse frequency transform may be based on 4-point IFFT or a 4-point IDFT. The features mentioned in this paragraph in combination with any one of the exemplary aspects fifteen to twenty-two provide a twenty-third exemplary aspect.

A predefined number of known base sequences may be from a set of 126 prototype sequences, the predefined number of known scrambling sequences may be from a set of 4 scrambling sequences, and the predefined number of known cyclic shifts may be from a set of 4 cyclic shifts. Alternatively, the predefined number of known prototype sequences may be from a set of 504 prototype sequences, and a predefined number of known phase shifts may be from a set of 4 phase shifts. The features mentioned in this paragraph in combination with any one of the exemplary aspects fifteen to twenty-three provide a twenty-fourth exemplary aspect.

The method may include receiving a radio signal including a plurality of Orthogonal Frequency Division Multiplex (OFDM) symbols carrying the received sequence. The features mentioned in this paragraph in combination with any one of the exemplary aspects fifteen to twenty-four provide a twenty-fifth exemplary aspect.

The method may include receiving the received sequence in an oversampled version. The features mentioned in this paragraph in combination with any one of the exemplary aspects fifteen to twenty-five provide a twenty-sixth exemplary aspect.

The method may include receiving the received sequence at a bandwidth corresponding to a multiple of 15 kHz. The features mentioned in this paragraph in combination with any one of the exemplary aspects fifteen to twenty-six provide a twenty-seventh exemplary aspect.

A computer readable non-transitory medium on which computer instructions are stored which when executed by a computer cause the computer to perform the method of any one of exemplary aspects fifteen or sixteen. The computer readable non-transitory medium mentioned in this paragraph provides a twenty-eighth exemplary aspect.

## BRIEF DESCRIPTION OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description.

Fig. 1 is a schematic diagram illustrating cell search in an exemplary mobile communication system 100.

Fig. 2 is a block diagram of an exemplary N-SSS generation module 200 at the eNodeB transmitter according to an exemplary implementation.

Fig. 3 is a block diagram of an exemplary receiver structure 300 with a brute force correlation receiver 600 according to an exemplary implementation.

Fig. 4 is a block diagram of an exemplary receiver structure 400 with a low-complexity correlation receiver 700 according to an exemplary implementation.

Fig. 5 is an exemplary performance diagram 500 illustrating a simulated cell-ID detection probability for the brute force correlation receiver 600 and the low-complexity correlation receiver 700.

Fig. 6 is an exemplary block diagram of the brute force correlation receiver 600 of Fig. 3 in an enlarged view.

Fig. 7 is an exemplary block diagram of the low-complexity correlation receiver 700 of Fig. 4 in an enlarged view.

Fig. 8a is an exemplary block diagram illustrating the detailed structure 800 of the low-cost energy computation blocks S18.b in the low-complexity correlation receiver 700 of Fig. 7.

Fig. 8b shows a respective exemplary structure of the low-cost energy computation block for signals defined in the time domain.

Fig. 9 is a block diagram of an exemplary general receiver concept 900.

Fig. 10 is a block diagram illustrating an exemplary elementary signal processing unit 1000 of the low-complexity correlation receiver.

Fig. 11 is a block diagram illustrating an exemplary general structure 1100 of the low-complexity correlation receiver.

Fig. 12 is a block diagram of an exemplary detection device 1200 according to the disclosure.

Fig. 13 is a schematic diagram of an exemplary method 1300 for detecting a specific prototype sequence according to the disclosure.

## DETAILED DESCRIPTION

In the following detailed description, reference is made to the accompanying drawings, which form a part thereof, and in which is shown by way of illustration specific aspects in which the invention may be practiced. It is understood that other aspects may be utilized and structural or logical changes may be made without departing from the scope of the present invention. The following detailed description, therefore, is not to be taken in a limiting sense, and the scope of the present invention is defined by the appended claims. The following terms, abbreviations and notations will be used herein:

| | |
|---|---|
| N-SSS: | Narrowband Secondary Synchronization Signal |
| N-PSS: | Narrowband Primary Synchronization Signal |
| NB: | Narrowband |
| IoT: | Internet of Things |
| OFDM: | Orthogonal Frequency Division Multiplex |
| ID: | Identifier |
| RF: | Radio frequency |
| IFFT: | Inverse Fast Fourier Transform |
| IDFT: | Inverse Discrete Fourier Transform |
| eNodeB: | Base Station |
| ZC: | Zadoff-Chu |
| CSD: | Cross Spectral Density |
| UE: | User Equipment, Mobile Device |

The methods and devices described herein may be based on receiver structures like radio receivers and correlation receivers, in particular receiver structures receiving synchronizations signals for cell search, e.g. N-SSS. It is understood that comments made in connection with a described method may also hold true for a corresponding device configured to perform the method and vice versa. For example, if a specific method step is described, a corresponding device may include a unit to perform the described method step, even if such a unit is not explicitly described or illustrated in the figures. Further, it is understood that the features of the various exemplary aspects described herein may be combined with each other, unless specifically noted otherwise.

The methods and devices described herein may be configured to transmit and/or receive radio signals and performing associated signal processing. Radio signals may be or may include radio frequency signals generated by a radio transmitting device (or radio transmitter or sender) with a radio frequency lying in a range of about 3 kHz to 300 GHz. The frequency range may correspond to frequencies of alternating current electrical signals used to produce and detect radio waves.

The methods and devices described herein may be implemented in wireless communication networks, in particular communication networks based on mobile communication standards such as LTE, in particular 4.5G, 5G and beyond. The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The methods and devices described herein may be implemented in Narrowband Internet-of-Things (NB-IoT). NB-IoT is a Low Power Wide Area Network (LPWAN) radio technology standard that has been developed to enable a wide range of devices and services to be connected using cellular telecommunications bands. NB-IoT is a narrowband radio technology designed for the Internet of Things (IoT), and is one of a range of Mobile IoT (MIoT) technologies standardized by the 3rd Generation Partnership Project (3GPP). The NB-IoT specification was frozen at Release 13 of the 3GPP specification (LTE-Advanced Pro), in June 2016. The new technology provides improved indoor coverage, support of massive number of low throughput devices, low delay sensitivity, ultra-low device cost, low device power consumption and optimized network architecture. The technology can be deployed "in-band", utilizing resource blocks within a normal LTE carrier, or in the unused resource blocks within a LTE carrier's guard-band, or "standalone" for deployments in dedicated spectrum. It is also suitable for the re-farming of GSM spectrum.

In the following, techniques for designing a low-complexity (or low-cost) correlation receiver for N-SSS detection are presented, which shows exactly the same performance as the brute force (or high-complexity) correlation receiver, also described in the following, but at significantly lower complexity. The main idea of the brute force correlation receiver as described below is to apply the signal processing steps applied at the eNodeB transmitter in the reverse order to the received signal at the UE receiver. The decision on the N-SSS sequence is made based on the computation and comparison of cross energies between the received N-SSS sequence and all possible N-SSS hypotheses, where the respective computation of the cross energies is performed in the frequency domain.

Methods and devices described hereinafter provide an efficient way for the computation of the cross energies in the time domain by exploiting the properties of the transmitted N-SSS sequence. With the following two key ideas of the disclosure the complexity for the computation of the cross energies can be significantly reduced compared to the complexity of the brute force correlation receiver: For a given cell-ID hypothesis the cross energies associated with the four cyclic shift hypotheses can be obtained from a single cross correlation function in the time domain. Each of the respective cross energies corresponds to the value of the cross correlation function at the lag equal to the respective cyclic shift, respectively. Hence, it is sufficient to compute the cross correlation function only at the four equidistant lags 0, 33, 66, and 99, respectively. In other words: decimating the cross correlation function by the factor 33 leads to the respective cross energies. The disclosure presents an efficient method for the computation of the decimated cross correlation function from the received N-SSS sequence in the frequency domain as described hereinafter. The presented approach considers solely the properties of the transmitted N-SSS sequence in order to reduce the complexity for the implementation.

Methods and devices according to the disclosure present a design for a low-complexity correlation receiver for the detection of the secondary synchronization signal (N-SSS) in NB-IoT UE receivers. The presented techniques exploit the fact that for each cell-ID four N-SSS hypotheses exist, which can be obtained from the other by a cyclic shift in the time domain, where the respective cyclic shifts are equidistant. Methods and devices according to the disclosure present a technique to compute cross energies associated with each hypothesis in the time domain rather than in the frequency domain. Methods and devices according to the disclosure exploit the fact that cyclically shifting of one of the two signals involved in the computation of the cross correlation leads to a cyclic shift of the cross correlation by the same shift. Methods and devices according to the disclosure exploit the fact that decimation of the cross correlation in the time domain corresponds to aliasing of the corresponding cross spectral density in the frequency domain.

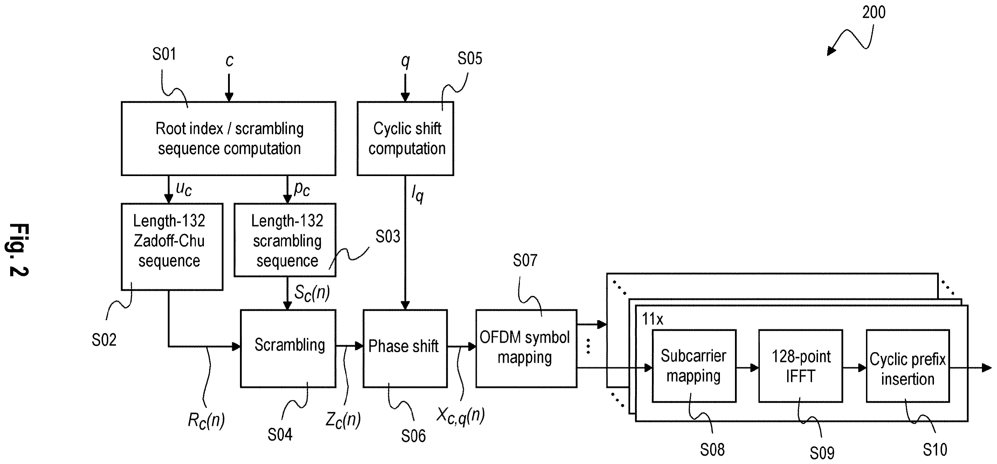

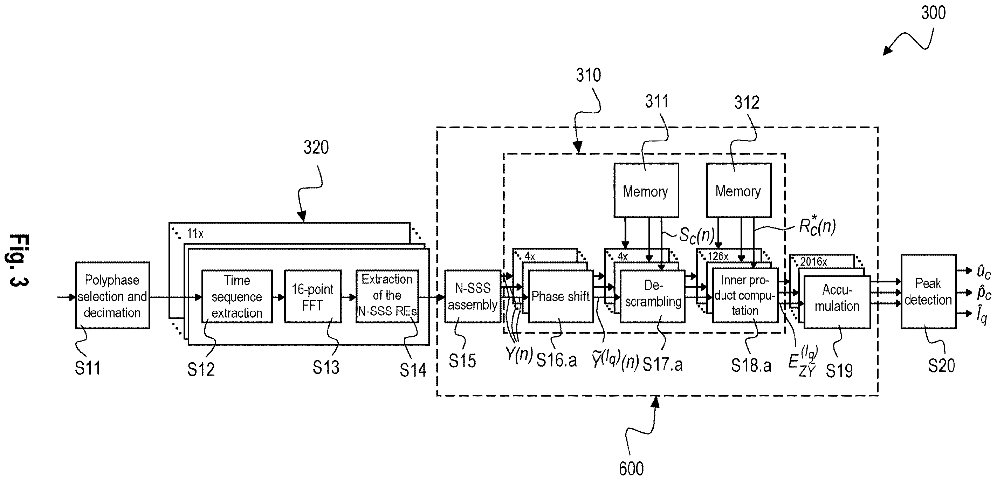

Fig. 1 is a schematic diagram illustrating cell search in an exemplary mobile communication system 100. The mobile communication device 120 can include a receiver structure as described in the following that may be used to perform cell search for detecting a suitable radio cell 110. Such a receiver device may include a detection device with a receiver for receiving a received sequence, e.g. an NB-IoT N-PSS or N-SSS signal as shown in Figure 1, and a processor for processing the received sequence in order to detect a specific prototype sequence from the received sequence and a cyclic shift of the prototype sequence. This specific prototype sequence may be a specific N-SSS synchronization signal to be detected by the receiver structure, e.g. as described below with respect to Figures 2 to 13. The mobile communication device 120 may include a memory for storing the received sequence and intermediate sequences processed by the processor while detecting the specific prototype sequence. During the detection process, the processor may perform the following computations: 1) Determining a sequence of cross spectral densities based on the received sequence and a predefined number of known prototype sequences; 2) Determining an inverse frequency transform of the sequence of cross spectral densities at lags corresponding to a predefined number of known cyclic shifts; and 3) Detecting the specific prototype sequence and its cyclic shift based on the inverse frequency transform of the cross spectral densities. High level block diagrams of such receiver structures and detection devices are described below with respect to Figures 3, 4 and 6 to 12.

Fig. 2 is a block diagram of an exemplary N-SSS generation module 200 at the eNodeB transmitter according to an exemplary implementation. In this disclosure it is assumed that the cell timing is known at the receiver via a successful N-PSS detection and that the initial frequency offset is compensated for. Methods and devices presented in this disclosure focus on the N-SSS detection. Once the N-SSS is detected, the cell-ID and the 80 ms timing can be determined from the detected N-SSS sequence.

There are a total of 504 different Cell-IDs specified for NB-IoT. There is a unique mapping of each cell-ID to one (out of 126) ZC-sequence and one (out of 4) scrambling sequence, where for NB-IoT Hadamard sequences are used as scrambling sequences. The N-SSS sequence is transmitted every 20 ms in subframe number 9 of every even numbered radio frame. In order to be able to detect the 80 ms timing, a specific cell-ID sequence is transmitted with a different cyclic shift on the 4 transmissions within an 80 ms time interval.

With each cell-ID

$$c = 0, \cdots, 503 \qquad\qquad (1)$$

a root sequence index $u_c$ and a scrambling sequence index $p_c$ are associated as follows (S01):

$$u_c = 3 + \mathrm{mod}(c, 126), \;\; u_c \in U_c = \{3, \cdots, 128\}, N_{u_c} = \mathrm{card}(U_c) = 126, \qquad (2)$$

$$p_c = \left\lfloor \frac{c}{126} \right\rfloor, \;\; p_c \in P_c = \{0, \cdots, 3\}, \; N_{p_c} = \mathrm{card}(P_c) = 4. \qquad (3)$$

The cyclically extended length-131 Zadoff-Chu sequence, shortly the Zadoff-Chu sequence, is determined from the root sequence index $u_c$ as follows (S02):

$$R_c(n) = exp\left( -j\pi \frac{u_c n'(n'+1)}{131} \right), n' = mod(n, 131), n = 0, \cdots, 131. \qquad (4)$$

The cell-ID sequence $Z_c(n)$ is obtained by multiplication (S04) of the Zadoff-Chu sequence $R_c(n)$ with the scrambling sequence $S_c(n)$:

$$Z_c(n) = R_c(n) \cdot S_c(n), \qquad N_{Z_c} = N_{u_c} N_{p_c} . \qquad (5)$$

The scrambling sequence $S_c(n)$ is a cyclically extended length-128 Hadamard sequence:

$$S_c(n) = \mathrm{Hadamard}_{h_{p_c}}^{128x128}\big(\mathrm{mod}(n, 128)\big), n = 0, \cdots, 131, \qquad (6)$$

where $h_{pc}$ is the Hadamard sequence index, which is determined from the scrambling sequence index $p_c$ as follows (S03):

$$p_c = 0, 1, 2, 3 \;\rightarrow h_{p_c} = 0, 31, 63, 127. \qquad (7)$$

Dependent on the radio frame number $q$ of the radio frame, in which the N-SSS sequence $X_{c,q}(n)$ is transmitted, a different phase shift is applied (S06) to the respective occurrence of the cell-ID sequence $Z_c(n)$:

$$X_{c,q}(n) = Z_c(n) exp\left( -j2\pi n \frac{l_q}{132} \right), n = 0, \cdots, 131, \qquad (8)$$

where (S05):

$$l_q = 33 \cdot \mathrm{mod}\left( \left\lfloor \frac{q}{2} \right\rfloor, 4 \right), l_q \in L_q = \{0, 33, 66, 99\}, \; N_{l_q} = \mathrm{card}\left(L_q\right) = 4. \qquad (9)$$

It should be noted, that the above phase shift operation in the frequency domain corresponds to cyclically shifting the cell-ID sequence $Z_c(n)$ in the time domain by $l_q$ samples.

The 132 samples of the N-SSS sequence $X_{c,q}(n)$ are mapped to 11 OFDM symbols as follows. For each OFDM symbol 12 consecutive samples of the N-SSS sequence $X_{c,q}(n)$ are assigned to one (out of eleven) OFDM symbol (S07) and mapped to 12 subcarriers (S08). After applying an 128-point IFFT (S09), the respective OFDM symbol is generated by adding a cyclic prefix to the IFFT output (S10). It should be noted, that the above described eNodeB model is operating at 1.92 Msps, i.e. the transmitted N-SSS sequence is eight times oversampled.

According to the above description there are a total of 2016 (126 Zadoff-Chu sequences x 4 scrambling sequences x 4 cyclic shifts) different N-SSS sequences $X_{c,q}(n)$ defined for NB-IoT. At each N-SSS occurrence the NB-IoT receiver has to test the received N-SSS sequence against the 2016 different N-SSS hypotheses, where the respective testing can be performed by a correlation receiver.

Since NB-IoT is a new radio access technology, previous solutions for N-SSS detection do not exist. The low-complexity correlation receiver presented in this disclosure will be compared with a brute force correlation receiver in terms of complexity and performance. Note, the brute force correlation receiver can be considered as a kind of optimal receiver and is described in the following. The main idea of the brute force correlation receiver is to apply the signal processing steps applied at the eNodeB transmitter in the reverse order to the received signal at the UE receiver. Further, in order to decide on the N-SSS sequence the cross-energy between the received N-SSS sequence and all of the 2016 N-SSS hypotheses is computed. The cross energy is maximal for the hypothesis matching to the transmitted N-SSS sequence. The respective hypothesis represents a matched filter for the transmitted N-SSS sequence and the cross-energy corresponds to the received energy of the transmitted N-SSS sequence.

Fig. 3 is a block diagram of a receiver structure 300 with a brute force correlation receiver 600 according to an exemplary implementation. The receiver structure 300 includes a polyphase selection and decimation block S11, an exemplary number of eleven frequency transform blocks 320, each one including a time sequence extraction block S12, a 16-point FFT S13 and an extraction block S14 for extraction of the N-SSS resource elements (REs). The receiver structure 300 further includes the brute force correlation receiver 600 and a peak detection block S20. The brute force correlation receiver 600 includes an N-SSS assembly block S15, an exemplary number of four phase shift blocks S16.a, an exemplary number of four descrambling blocks S17.a coupled to respective memory blocks 311, an exemplary number of 126 inner product computation blocks S18.a coupled to respective memory blocks 312 and an exemplary number of 2016 optional accumulation blocks S19. The phase shift blocks S16.a, the descrambling blocks S17.a with respective memory blocks 311 and the inner product computation blocks S18a with respective memory blocks 312 form a specific computation block 310 of the brute force correlation receiver 600.

After polyphase selection and decimation of the received signal to 240 ksps (S11) the time samples associated with each OFDM symbol are extracted from the decimated received sequence (S12). Then, a 16-point FFT is applied to the time samples corresponding to each OFDM symbol (S13) and the 12 relevant subcarriers are extracted from the FFT output (S14). The received N-SSS sequence represents a concatenation of the subcarriers associated to the eleven N-SSS carrying OFDM symbols (S15).

Each received N-SSS sequence is phase shifted with the 4 different phase shift hypotheses (S16.a). And each phase shifted received N-SSS sequence is descrambled with the 4 different scrambling hypotheses (S17.a). At next the inner product between each phase shifted and descrambled received N-SSS sequence and the 126 different ZC-sequences is computed (S18.a). The respective inner products represent the cross energy corresponding to each of the N-SSS hypotheses. Optionally, the inner products associated with each of the N-SSS hypotheses can be accumulated over time (S19). Finally, the peak detection unit determines the maximal value over all of the 2016 computed (and optionally accumulated) inner products (S20). Due to the unique assignment of a root sequence index $u_c$, scrambling code index $p_c$ and cyclic shift $l_q$ to an N-SSS hypothesis, estimates of the root sequence index $\hat{u}_c$, scrambling code index $\hat{p}_c$ and cyclic shift $l_q$ are determined from the N-SSS hypothesis associated with the highest peak.

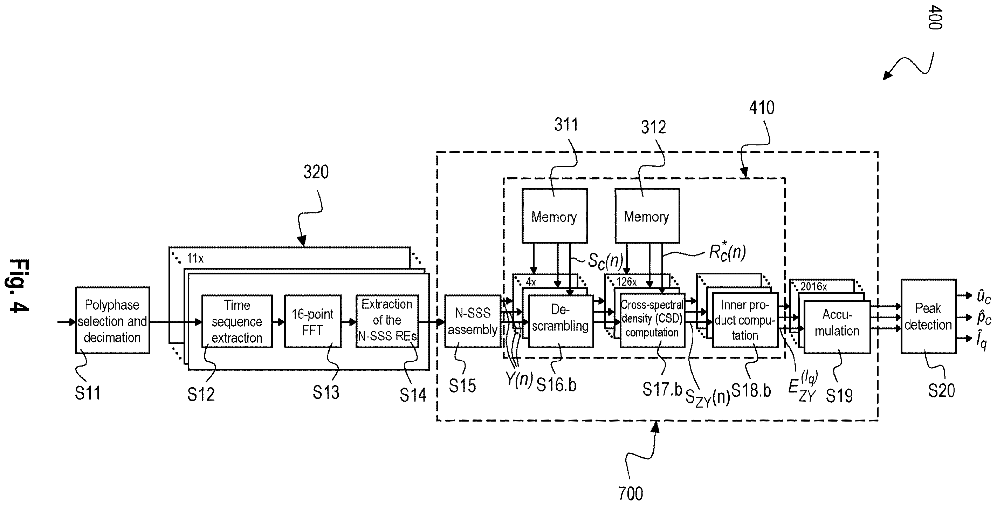

Fig. 4 is a block diagram of a receiver structure 400 with a low-complexity correlation receiver 700 according to an exemplary implementation. The receiver structure 400 includes a polyphase selection and decimation block S11, an exemplary number of eleven frequency transform blocks 320, each one including a time sequence extraction block S12, a 16-point FFT S13 and an extraction block S14 for extraction of the N-SSS resource elements (REs). The receiver structure 400 further includes the low-complexity correlation receiver 700 and a peak detection block S20.

The low-complexity correlation receiver 700 includes an N-SSS assembly block S15, an exemplary number of four descrambling blocks S16.b coupled to respective memory blocks 311, an exemplary number of 126 cross spectral density (CSD) computation blocks S17.b coupled to respective memory blocks 312, an exemplary number of 504 low-cost energy computation blocks S18.b and an exemplary number of 2016 optional accumulation blocks S19. The descrambling blocks S16.b with respective memory blocks 311, the CSD computation blocks S17.b with respective memory blocks 312 and the low-cost energy computation blocks S18.b form a specific computation block 410 of the low-complexity correlation receiver 700.

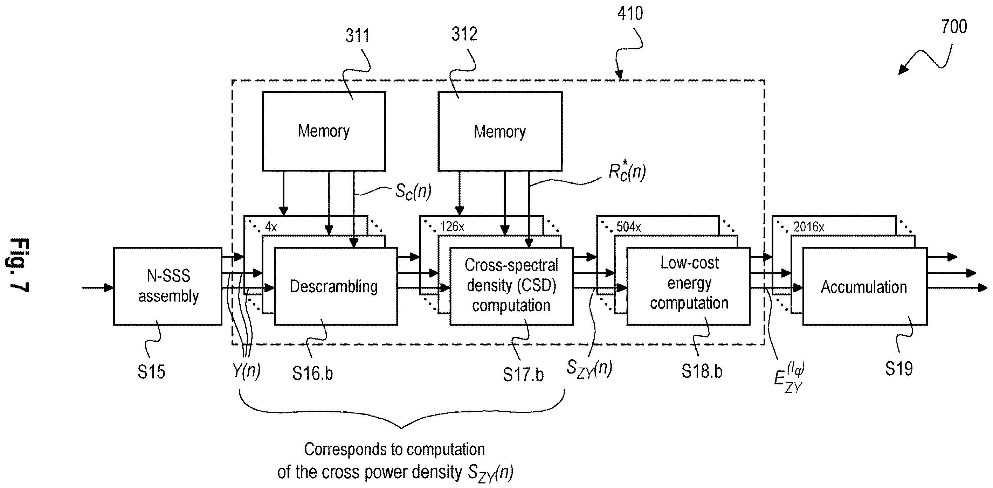

The computation block 410 differs from the respective computation block 310 of the brute force correlation receiver 600 of the receiver structure 300 described above with respect to Fig. 3. The functionality of the computation block 410 is described in detail below with respect to Fig. 7.

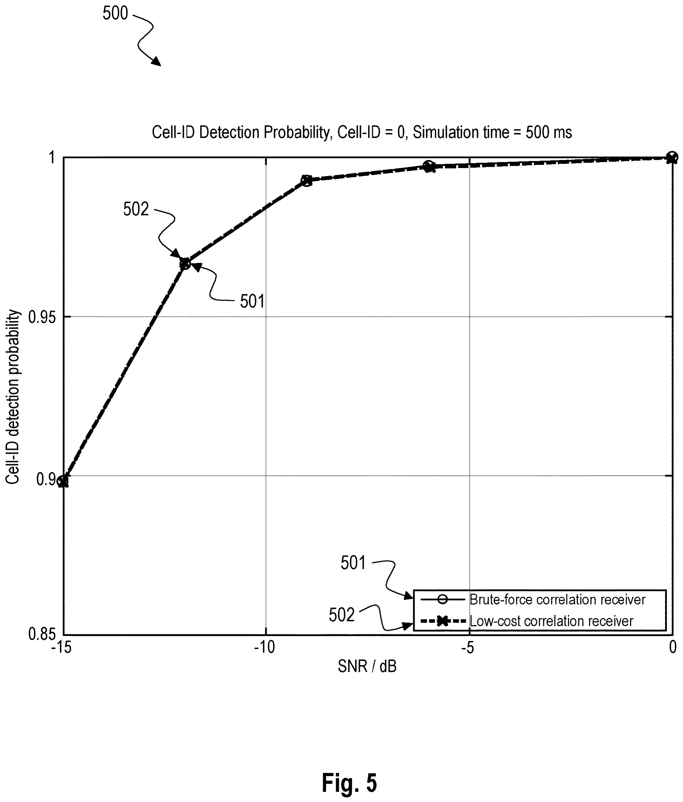

Fig. 5 is a performance diagram 500 illustrating a simulated cell-ID detection probability for the brute force correlation receiver 600 and the low-complexity correlation receiver 700.

The brute force correlation receiver 600 described above with respect to Fig. 3 can be seen as an optimal approach for hypothesis testing.

Figure 5 shows a comparison of the cell-ID detection probability 501, 502 for the brute force 600 as well as the low-complexity correlation receiver 700. As it can be seen, the cell-ID detection probability 501, 502 for both approaches is identical.

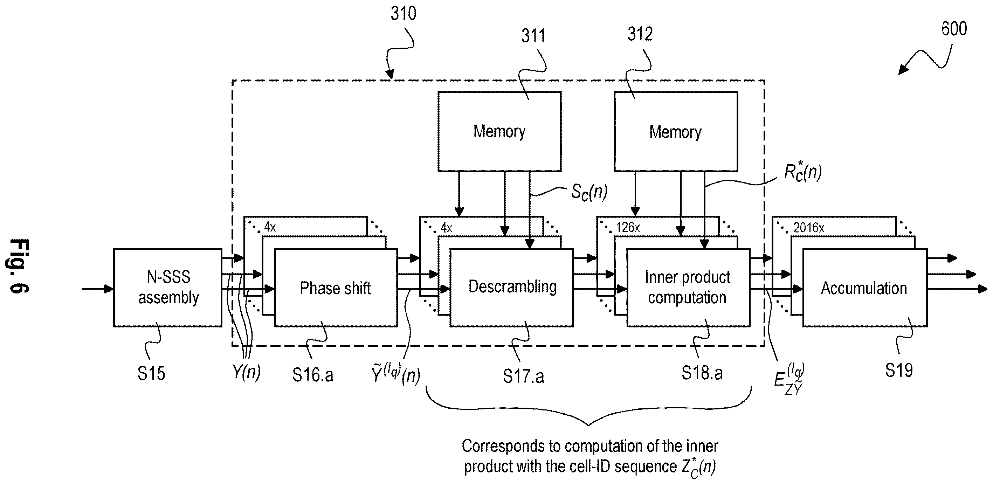

Fig. 6 is a block diagram of the brute force correlation receiver 600 of Fig. 3 in an enlarged view.

In order to explain the main idea behind this disclosure, let us assume that the cell-ID $c$ is known. This means that the transmitted Zadoff-Chu sequence, shortly the cell-ID sequence:

$$Z_c(n) = R_c(n) \cdot S_c(n) \qquad\qquad (10)$$

is known, where $R_c(n)$ is the cyclically extended root Zadoff-Chu sequence and $S_c(n)$ is the scrambling sequence.

For a known cell-ID sequence $Z_c(n)$ one has to find solely the cyclic shift $l_q$ applied at the transmitter side. In the following the structure of the low-complexity correlation receiver is derived, where the brute force correlation receiver is considered as the starting point for the respective derivation. The principle of the brute force correlation receiver 600 is shown in Figure 6.

For the brute force correlation receiver in order to decide on the cyclic shift $l_q$ (in the time domain) or equivalently the corresponding phase shift (in the frequency domain) the received N-SSS sequence $Y(n)$ is phase shifted with the four different phase shift hypotheses, first (S16.a). Then, for each of the phase shifted N-SSS sequences:

$$\tilde{Y}^{(l_q)}(n) = Y(n)\exp\left(j2\pi n \frac{l_q}{132}\right),\ l_q \in \{0, 33, 66, 99\}, \qquad\qquad (11)$$

the cross-energy $E_{Z\tilde{Y}}^{(l_q)}$ with the cell-ID sequence $Z_c(n)$, is computed (S17.a, S18.a).

The respective cross-energy $E_{Z\tilde{Y}}^{(l_q)}$ is computed in the frequency domain by accumulation over the cross spectral density $S_{Z\tilde{Y}}^{(l_q)}(n)$ of the phase shifted received N-SSS sequence $\tilde{Y}^{(l_q)}(n)$ and the cell-ID sequence $Z_c(n)$ as follows:

$$
\begin{aligned}
E_{Z\tilde{Y}}^{(l_q)} &= \frac{1}{N}\sum_{n=0}^{N-1} S_{Z\tilde{Y}}^{(l_q)}(n) \\
&= \frac{1}{N}\sum_{n=0}^{N-1} Z_c^*(n)\tilde{Y}^{(l_q)}(n) \qquad\qquad (12) \\
&= \frac{1}{N}\sum_{n=0}^{N-1} Z_c^*(n)Y(n)\exp\left(j2\pi n \frac{l_q}{132}\right), l_q \in \{0, 33, 66, 99\},
\end{aligned}
$$

where

$$
\begin{aligned}
S_{Z\tilde{Y}}^{(l_q)}(n) &= Z_c^*(n)\tilde{Y}^{(l_q)}(n) \\
&= S_c(n)R_c^*(n)\tilde{Y}^{(l_q)}(n)
\end{aligned}
\qquad\qquad (13)
$$

is the cross spectral density of the phase shifted received N-SSS sequence $\tilde{Y}^{(l_q)}(n)$ and the cell-ID sequence $Z_c(n)$ .

The cross-energy $E_{Z\tilde{Y}}^{(l_q)}$ in (12) can be determined by means of an inner product computation as follows:

$$E_{Z\tilde{Y}}^{(l_q)} = \mathbf{Z}^H\tilde{\mathbf{Y}}^{(l_q)} \qquad\qquad (14)$$

with the vectors

$$\mathbf{Z} = [Z_c(0) \quad \cdots \quad Z_c(N-1)]^\mathrm{T} \qquad\qquad (15)$$

and

$$\widetilde{Y}^{(l_q)} = \left[ Y(0) \quad \cdots \quad Y(N-1)\exp\left(j2\pi(N-1)\frac{l_q}{132}\right) \right]^{\mathrm{T}}. \qquad (16)$$

The cross-energy $E_{Z\widetilde{Y}}^{(l_q)}$ in (12) is maximal for the shift hypothesis $l_q$, which matches to the shift applied at the transmitter side.

Based on the above description of the brute force correlation receiver the structure of the low-complexity correlation receiver is derived in the following.

Fig. 7 is a block diagram of the low-complexity correlation receiver 700 of Fig. 4 in an enlarged view.

The correlation receiver 700 includes a plurality of descrambling units S16.b configured to descramble a received Narrowband Secondary Synchronization Signal (N-SSS) sequence $Y(n)$ with a respective scrambling sequence of a predefined number $N_{pc}$ of known scrambling sequences $S_c(n)$, e.g. as described above with respect to Fig. 2. The correlation receiver 700 further includes a plurality of cross spectral density computation units S17.b, each cross spectral density computation unit configured to determine a cross spectral density $S_{ZY}(n)$ based on a respective descrambled received sequence and a Zadoff-Chu sequence $R_c(n)$ of a predefined number $N_{uc}$ of known Zadoff-Chu sequences $R_c(n)$, e.g. as described above with respect to Fig. 2. The correlation receiver 700 further includes a plurality of energy computation units S18.b, each energy computation unit configured to determine an energy from a respective cross spectral density $S_{ZY}(n)$ for a predefined number $Nl_q$ of known cyclic shifts, e.g. as described above with respect to Fig. 2.

The predefined number $N_{l_q}$ of known cyclic shifts may be from a set of equidistant cyclic shifts. The correlation receiver 700 may further include a peak detector configured to detect a peak based on outputs of the plurality of energy computation units S18.b. The correlation receiver 700 may optionally include a plurality of accumulation units S19, each accumulation unit configured to accumulate an output of a respective energy computation unit S18.b.

The predefined number $N_{uc}$ of known Zadoff-Chu sequences $R_c(n)$ may be from a set of 126 Zadoff-Chu sequences, the predefined number $N_{pc}$ of known scrambling sequences $S_c(n)$ may be from a set of 4 Hadamard sequences, and the predefined number $N_{l_q}$ of known cyclic shifts may be from a set of 4 cyclic shifts.

The structure of the low-complexity correlation receiver 700 can be derived based on the above description of the brute force correlation receiver 600 as follows.

With

$$z_c(k) = \mathrm{IDFT}\left\{ Z_c(n) \right\} \qquad (17)$$

the cell-ID sequence in time domain and

$$\begin{aligned}
\tilde{y}^{(l_q)}(k) &= \mathrm{IDFT}\left\{ \widetilde{Y}^{(l_q)}(n) \right\} \\
&= \mathrm{IDFT}\left\{ Y(n)\exp\left(j2\pi n\frac{l_q}{132}\right) \right\} \qquad (18) \\
&= y\left(k + l_q\right)
\end{aligned}$$

the by $l_q$ cyclically shifted received N-SSS sequence in time domain $y(k)$ and using the Parseval's theorem the cross energy $E_{Z\widetilde{Y}}^{(l_q)}$ in (12) can also be computed in the time domain as follows:

$$\begin{aligned}
E_{Z\widetilde{Y}}^{(l_q)} &= \frac{1}{N}\sum_{n=0}^{N-1} Z_c^*(n)\widetilde{Y}^{(l_q)}(n) \\
&= \sum_{k=0}^{N-1} z_c^*(k)\tilde{y}^{(l_q)}(k) \qquad (19) \\
&= R_{z\tilde{y}}^{(l_q)}(l=0),
\end{aligned}$$

where $R_{z\tilde{y}}^{(l_q)}(l)$ is the cross correlation of the by $l_q$ cyclically shifted received N-SSS sequence in time domain $y^{(l_q)}(k)$ and the cell-ID sequence in the time domain $z_c(k)$, respectively.

From (19) it can be seen that the value of the cross correlation $R_{z\tilde{y}}^{(l_q)}(l)$ at lag $l = 0$ corresponds to the cross energy $E_{Z\tilde{Y}}^{(l_q)}$ associated with the cyclic shift $l_q$.

One key idea of the disclosure is that it is sufficient to compute the cross correlation function $R_{z\tilde{y}}^{(l_q)}(l)$ only once, since a cyclic shift of the received N-SSS sequence in time domain leads to a cyclic shift of the cross correlation function by the same cyclic shift:

$$
\begin{aligned}
R_{z\tilde{y}}^{(l_q)}(l) &= \sum_{k=0}^{N-1} z(k)\tilde{y}^{(l_q)}(k+l) \\
&= \sum_{k=0}^{N-1} z(k)y\big(k+l+l_q\big) \\
&= R_{zy}\big(l+l_q\big)
\end{aligned}
\qquad (20)
$$

Note, the terms $y(k+l_q)$ and $R_{zy}(l+l_q)$ in (20) represent the by $l_q$ cyclically shifted received N-SSS sequence in time domain $y(k)$ and the by $l_q$ cyclically shifted cross correlation function $R_{zy}(l)$, respectively.

With (19) and (20) it follows:

$$
\begin{aligned}
E_{Z\tilde{Y}}^{(l_q)} &= R_{z\tilde{y}}^{(l_q)}(l=0) \\
&= R_{zy}\big(l=l_q\big) \\
&= E_{ZY}^{(l_q)}.
\end{aligned}
\qquad (21)
$$

According to (21) the value of the cross correlation function $R_{zy}(l)$ at lag $l = l_q$ corresponds to the cross energy $E_{ZY}^{(l_q)}$ associated with the cyclic shift $l_q$, where $l_q \in \{0, 33, 66, 99\}$.

Though, for each cell-ID sequence in time domain $z_c(k)$ the cross correlation function $R_{zy}(l)$ has to be evaluated at the four different lags 0, 33, 66, and 99, respectively.

The cross correlation function $R_{zy}(l)$ in (21) can be obtained from the cross spectral density:

$$
\begin{aligned}
S_{ZY}(n) &= Z_c^*(n)Y(n) \\
&= S_c(n)R_c^*(n)Y(n)
\end{aligned}
\qquad (22)
$$

by an IDFT as follows:

$$
R_{zy}(l) = \text{IDFT}\big\{S_{ZY}(n)\big\}.
\qquad (23)
$$

The computation of the full cross correlation function $R_{zy}(l)$ from the cross spectral density $S_{ZY}(n)$ is computational expensive, even when for its computation a computational efficient method like an IFFT is used.

Another key idea of the disclosure is to determine the value of the cross correlation function $R_{zy}(l)$ only at lags $l = 0$, 33, 66, and 99, respectively. The respective computation can be performed from the cross spectral density $S_{ZY}(n)$ in a computational efficient way.

The respective efficient computation can be performed by taking the aliasing theorem of the Fourier transform into account, according to which aliasing the cross spectral density $S_{ZY}(n)$ (in the frequency domain) corresponds to decimation of the cross correlation function $R_{zy}(l)$ (in the time domain) as follows:

$$R_{zy}(Ml) = \text{IDFT}\left\{\frac{1}{M}\sum_{m=0}^{M-1} S_{ZY}\left(l + m\frac{N}{M}\right)\right\}, M = 33, N = 132,$$

$$l = 0, \cdots, 3,$$

(24)

By using the above theorem, only a 4-point IDFT needs to be applied to the aliased cross spectral density instead of a 132-point IDFT. Note that every IDFT in this disclosure can also be implemented by any other frequency-to-time transform such as an IFFT (Inverse Fast Fourier Transform) or even by any other time-to-frequency-transform such as an FFT (Fast Fourier Transform). In particular, in equation (24) an IFFT can be used instead of an IDFT due to its lower complexity.

Figure 7 illustrates the principle of the low-complexity correlation receiver. First, each received N-SSS sequence is descrambled with the 4 different scrambling hypotheses (S16.b). Then, for each descrambled received N-SSS sequence the cross-spectral density with the 126 different ZC-sequences is computed (S17.b). Finally, the cross energies $E_{ZY}^{(l_q)}$ are computed by the low-cost energy computation block (S18.b).

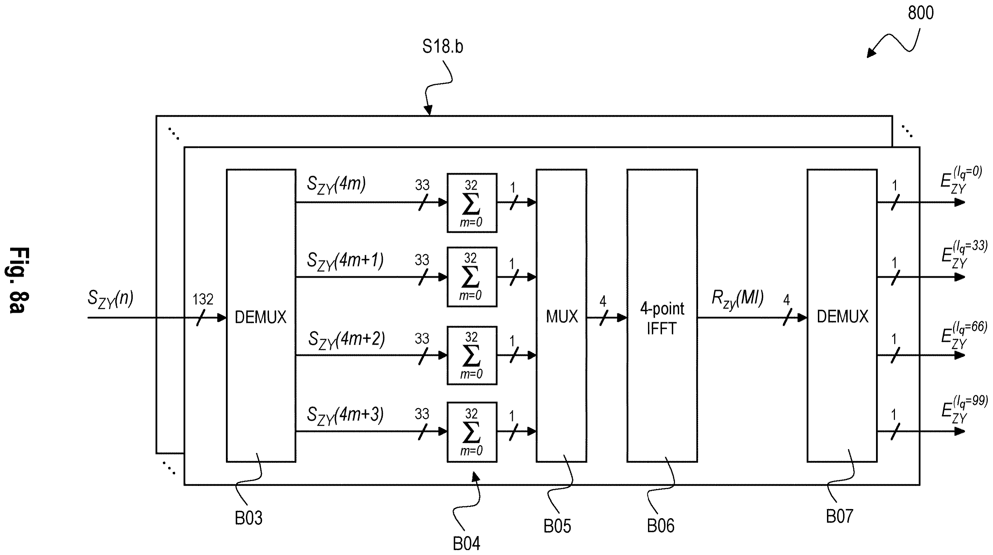

A more detailed structure of the above derived low-cost energy computation block S18.b is presented in Figure 8a.

Fig. 8a is a block diagram illustrating the detailed structure 800 of the low-cost energy computation blocks S18.b in the low-complexity correlation receiver 700 of Fig. 7.

Each energy computation unit S18.b includes a first demultiplexer B03 configured to demultiplex the respective cross spectral density $S_{ZY}(n)$ into components associated with the predefined number $N_{l_q}$ of cyclic shifts. Each energy computation unit S18.b includes a plurality of accumulators B04, each accumulator coupled to a respective demultiplexed component $S_{ZY}(4m)$, $S_{ZY}(4m+1)$, $S_{ZY}(4m+2)$ and $S_{ZY}(4m+3)$ of the corresponding cross spectral density $S_{ZY}(n)$. Each energy computation unit S18.b includes an inverse Fast Fourier Transform (IFFT) module B06 configured to determine an IFFT based on the respective aliased cross spectral density:

$$\left[\sum_{m=0}^{32} S_{ZY}(4m), \sum_{m=0}^{32} S_{ZY}(4m + 1), \sum_{m=0}^{32} S_{ZY}(4m + 2), \sum_{m=0}^{32} S_{ZY}(4m + 3)\right]$$

(25)

for the predefined number $N_{l_q}$ of cyclic shifts.

Each energy computation unit S18.b includes a second demultiplexer B07 configured to demultiplex an output of the IFFT module B06 into components $E_{ZY}^{(lq=0)}$, $E_{ZY}^{(lq=33)}$, $E_{ZY}^{(lq=66)}$ and $E_{ZY}^{(lq=99)}$ associated with the predefined number $N_{l_q}$ of cyclic shifts which components $E_{ZY}^{(lq=0)}$, $E_{ZY}^{(lq=33)}$, $E_{ZY}^{(lg=66)}$ and $E_{ZY}^{(lq=99)}$ represent received energies associated with the N-SSS hypotheses $X_{c,q}(n)$. The IFFT module B06 is based on a 4-point IFFT in this example. As noted above, instead of an IFFT any other frequency-to-time transform module can be applied.

In Figure 8a there are shown an exemplary number of 504 low-cost energy computation blocks S18.b. Each low-cost energy computation block S18.b includes a first demultiplexer B03, an exemplary number of four accumulators B04, a multiplexer B05, a (4-point) IFFT block B06 and a second demultiplexer B07. The first demultiplexer B03 is used for demultiplexing $S_{ZY}(n)$ into an exemplary number of four phase components $S_{ZY}(4m)$, $S_{ZY}(4m+1)$, $S_{ZY}(4m+2)$ and $S_{ZY}(4m+3)$ which are provided to the exemplary number of four accumulators B04. Outputs of the accumulators B04 are provided to the multiplexer B05 which output is provided to the (4-point) IFFT block B06. The IFFT block B06 computes an inverse frequency transform of the MUX output signal and provides the by factor M decimated cross-correlation function $R_{zy}(Ml)$ to the second demultiplexer B07 which computes the exemplary number of four cross energies $E_{ZY}^{(lq=0)}$, $E_{ZY}^{(lq=33)}$, $E_{ZY}^{(lq=66)}$ and $E_{ZY}^{(lq=99)}$ as described above with respect to Fig. 7. The decimation of the cross-correlation function in the time domain is implicitly performed by aliasing the cross spectral density in the frequency domain.

The above derived structure 800 of the low-cost energy computation block S18.b in Fig. 8a assumes prototype sequences $Z_c(n)$, which are defined in the frequency domain. It should be noted, that the structure 800 is not restricted to be applied only to sequences defined in the frequency domain. The above structure 800 of the low-cost energy computation block S18.b may also be applied for the detection of a prototype sequence $p(k)$ and its cyclic shift $l_q$ when the respective prototype sequences $p(k)$ and the received sequence $r(k)$ are defined in the time domain, where the cyclic shift $l_q$ is assumed to be from a set of $N_{l_q}$ predefined equidistant cyclic shifts.

For a prototype sequence $p(k)$, which is defined in the time domain, the input signal:

$$S_{ZY}(n) = Z_c^*(n)Y(n) \qquad (22)$$

in the structure 800 in Fig. 8a has to be replaced by the product of the received sequence in time domain $r(k)$ and the conjugate complex of the prototype sequence in time domain $p(k)$, respectively:

$$w(k) = p^*(k)r(k). \qquad (22)$$

Further, the IFFT (or alternatively the IDFT) operation (B06) in the structure 800 in Fig. 8a has to be replaced by an FFT (or alternatively DFT) operation. It should be noted, that the IFFT and FFT (or alternatively the IDFT and the DFT) operation may be realized by one processing (hardware/software) block. The respective processing block has to be configured appropriately to operate as IFFT or FFT (or alternatively as IDFT or DFT).

With the above described modifications the outputs of the demultiplexer (B07) in the structure 800 in Fig. 8a are corresponding to the cross energies $E_{pr}^{(l_q)}$ associated with the respective cyclic shift hypotheses $l_q$.

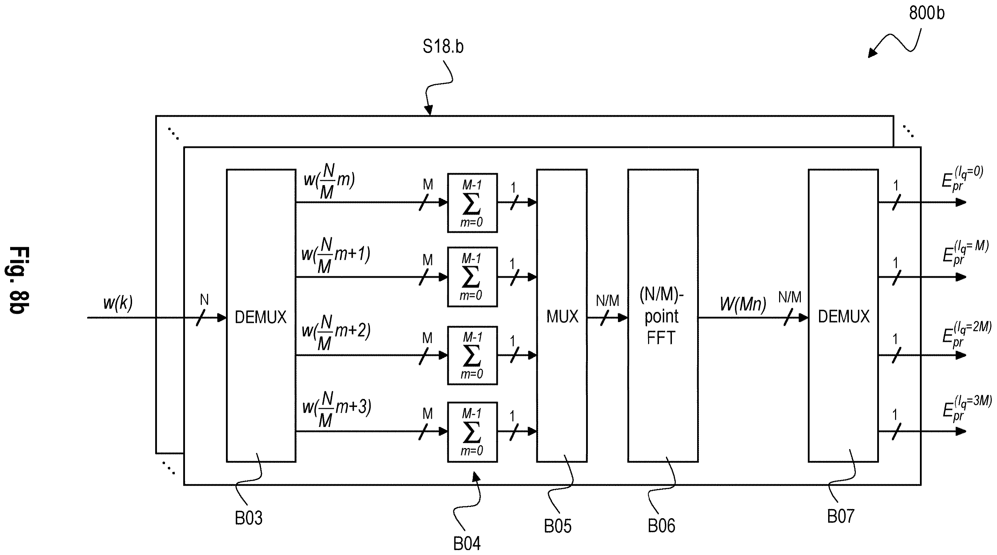

Fig. 8b shows the respective structure of the low-cost energy computation block for signals defined in the time domain (according to the above description). The structure in Fig. 8b represents an example for the sequence length $N = 132$ and distance between two cyclic shifts $M = 33$.

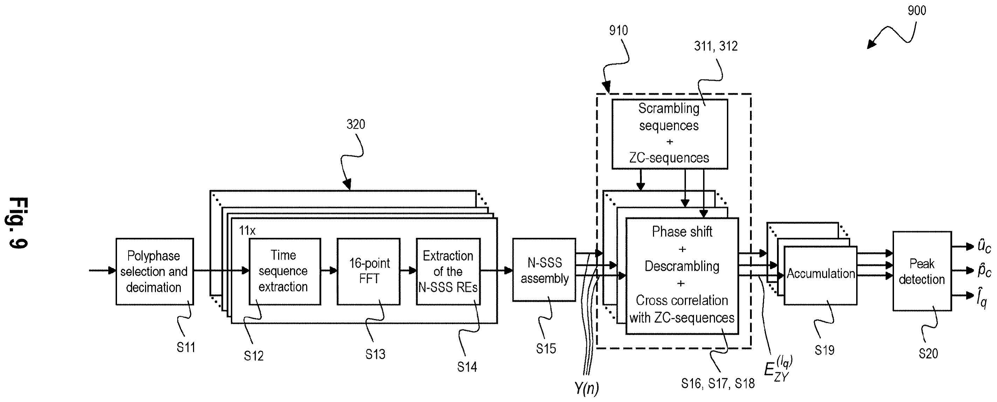

Fig. 9 is a block diagram of a general receiver concept 900. The structure of the correlation receiver 900 represents a possible implementation option of the general cell-ID and 80ms-timing detection device 900.
The computation block 310 shows the realization of the cell-ID and 80ms-timing detection block 910 when it is implemented as a brute force correlation receiver. Alternatively, the computation block 410 shows the realization of the cell-ID and 80ms-timing block 910 when it is implemented as a low-complexity correlation receiver.

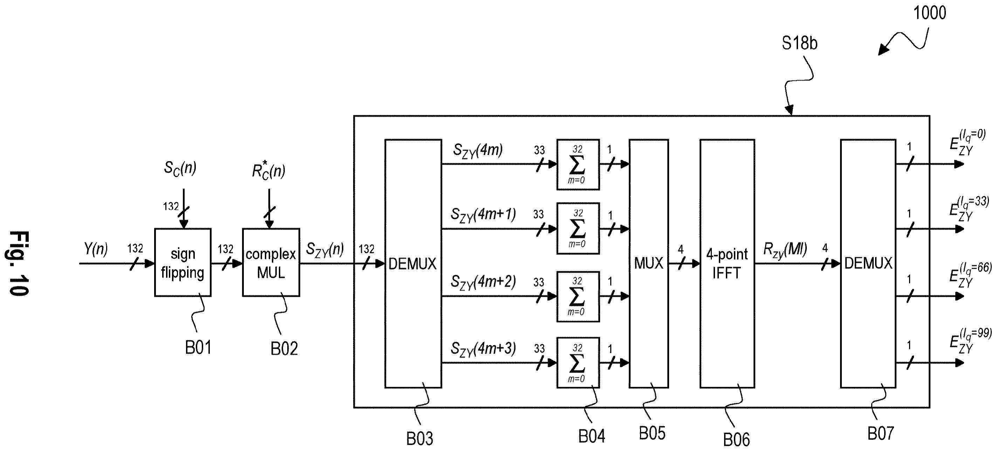

Fig. 10 is a block diagram illustrating an elementary signal processing unit 1000 of the low-complexity correlation receiver. Figure 10 shows the signal processing steps, which are applied to the received N-SSS sequence $Y(n)$ for one (out of 4) specific scrambling hypothesis $S_c(n)$ and one (out of 126) specific ZC-sequence hypothesis $R_c(n)$. The respective block diagram can be regarded as an elementary signal processing unit, which is applied to the received N-SSS sequence $Y(n)$ for one (out of 504) cell-ID hypothesis $Z_c(n)$.

At first, dependent on the value of each sample of the scrambling sequence $S_c(n)$ the sign of the corresponding sample of the received N-SSS sequence $Y(n)$ is flipped (B01), where $n = 0,...,131$. Then, the resultant sequence is sample-wise multiplied (B02) with the conjugate-complex of the ZC-sequence $R_c^*(n)$. The sequence after the complex multiplication corresponds to the cross spectral density $S_{ZY}(n)$, which is demultiplexed (B03) into 4 streams of the same length. After accumulation of the samples corresponding to each stream (B04) the resultant 4 accumulated samples are multiplexed (B05) to a new sequence, which corresponds to the aliased cross spectral density. Finally, applying a 4-point IFFT (B06) to the aliased cross spectral density results in the by factor $M=33$ decimated cross correlation function $R_{zy}(Ml)$.

Demuliplexing (B07) of $R_{zy}(Ml)$ yields the cross energies $E_{ZY}^{(l_q)}$ associated with the cyclic shifts $l_q$, where $l_q \in \{0, 33, 66, 99\}$.

Note, the computation of the cross spectral density $S_{ZY}(n)$ may also be performed in a different way than depicted in Figure 10 (B01, B02). For example, one can compute the conjugate-complex of the cell-ID sequence $Z_c^*(n)$ by scrambling (flipping the sign) the conjugate-complex of the Zadoff-Chu sequence $R_c^*(n)$ with the scrambling sequence $S_c(n)$, first. Then, the cross spectral density $S_{ZY}(n)$ can be obtained by sample-wise complex multiplication of the conjugate-complex of the cell-ID sequence $Z_c^*(n)$ with the received N-SSS sequence $Y(n)$.

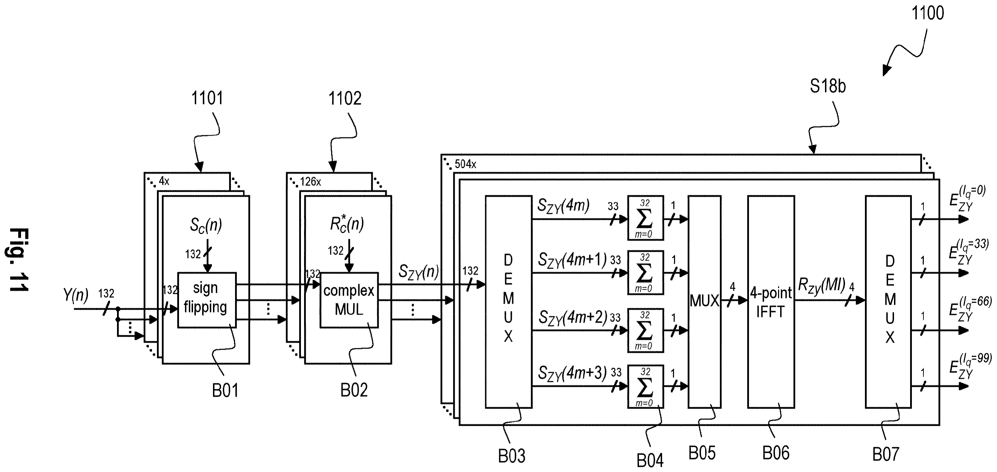

Fig. 11 is a block diagram illustrating a general structure 1100 of the low-complexity correlation receiver.. At first the received N-SSS sequence $Y(n)$ is descrambled with the 4 different scrambling hypotheses $S_c(n)$, where the descrambling operation is realized by sample-wise flipping the sign (B01) of the received N-SSS sequence $Y(n)$. Note, the descrambling with the 4 scrambling hypotheses $S_c(n)$ can be performed simultaneously (parallel in time) or successively (consecutive in time).

Each descrambled received N-SSS sequence is sample-wise multiplied (B02) with the conjugate-complex of the 126 different ZC-sequence hypotheses $R_c^*(n)$. Note, the sample-wise multiplication with the 126 ZC-sequence hypotheses $R_c^*(n)$ can be performed simultaneously (parallel in time) or successively (consecutive in time).

Further note, one can descramble the received N-SSS sequence $Y(n)$ with the 4 scrambling hypotheses $S_c(n)$ first and then compute for each descrambled received N-SSS sequence the complex multiplications with the 126 ZC-sequence hypotheses $R_c^*(n)$, as indicated in Figure 11. An alternative option is to descramble the received N-SSS sequence $Y(n)$ with one of the scrambling hypotheses $S_c(n)$ first and then compute for this particular descrambled received N-SSS sequence the complex multiplications with the 126 ZC-sequence hypotheses $R_c^*(n)$ before descrambling the received N-SSS sequence $Y(n)$ with the next scrambling hypothesis $S_c(n)$. The respective processing steps can be repeated for the remaining 3 scrambling hypotheses $S_c(n)$.

The sample-wise complex multiplication of one (out of 4) descrambled received N-SSS sequence $Y(n) S_c(n)$ with the conjugate complex of one (out of 126) ZC-sequence hypotheses $R_c^*(n)$ corresponds to one (out of 504) cross spectral density $S_{ZY}(n)$.

For each cell-ID hypothesis $Z_c(n)$ the respective cross spectral density $S_{ZY}(n)$ is demultiplexed into 4 streams (B03) of the same length. The samples corresponding to each stream are accumulated (B04). Then, the resultant 4 accumulated samples are multiplexed (B05) to a new sequence, which corresponds to the aliased cross spectral density. Finally, applying a 4-point IFFT (B06) to the aliased cross spectral density results in the by factor $M = 33$ decimated cross correlation function $R_{zy}(Ml)$. Demultiplexing (B07) of $R_{zy}(Ml)$ yields the cross energies $E_{ZY}^{(l_q)}$ associated with the cyclic shifts $l_q$, where $l_q \in \{0,33,66,99\}$.

Note, the above described computation of the 4 cross energies $E_{ZY}^{(l_q)}$ from a given cross spectral density $S_{ZY}(n)$ can be performed for all 504 different cell-IDs simultaneously (parallel in time) or successively (consecutive in time).

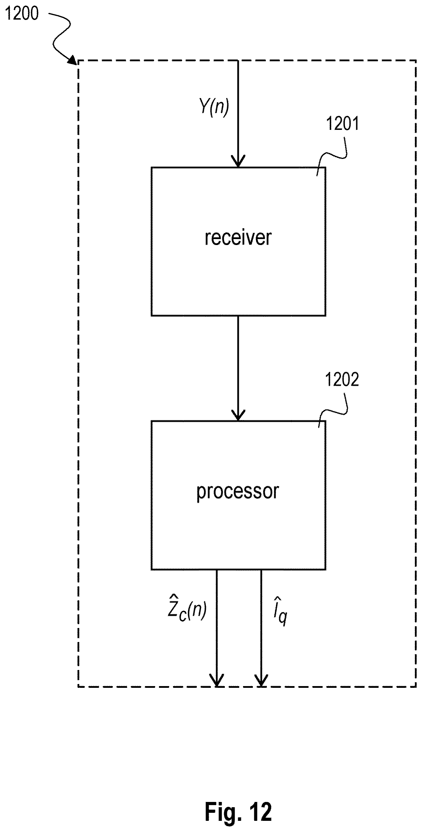

Fig. 12 is a block diagram of a detection device 1200 according to the disclosure. The detection device 1200 is a general representation of the low-complexity correlation receiver described above. The detection device 1200 includes a receiver 1201 configured to receive a received sequence, e.g. a received sequence $Y(n)$ as described above with respect to Figures 2 to 11. The detection device 1200 further includes a processor 1202 configured to: descramble the received sequence $Y(n)$ with a predefined number $N_{pc}$ of known scrambling sequences $S_c(n)$, e.g. as described above with respect to Fig. 2; determine a sequence of cross spectral densities $S_{ZY}(n)$ based on each of the descrambled received sequences and a predefined number $N_{uc}$ of known base sequences $R_c(n)$, e.g. as described above with respect to Figs. 2 to 11, where the base sequences may correspond to the Zadoff-Chu sequences $R_c(n)$ as described above with respect to Fig. 2; determine an inverse frequency transform of the sequence of cross spectral densities $S_{ZY}(n)$ at lags corresponding to a predefined number $N_{l_q}$ of known cyclic shifts, e.g. as described above with respect to Figs. 2 to 11; and detect a specific prototype sequence $\hat{Z}_c(n) = \hat{R}_c(n)\hat{S}_c(n)$ and its cyclic shift $\hat{l}_q$ based on the inverse frequency transform of the cross spectral densities $S_{ZY}(n)$, e.g. as described above with respect to Figs. 2 to 11.

The predefined number $N_{l_q}$ of known cyclic shifts may be from a set of equidistant cyclic shifts. The processor 1202 may be configured to determine the inverse frequency transform of the sequence of cross spectral densities $S_{ZY}(n)$ only at the lags corresponding to the predefined number $N_{l_q}$ of known equidistant cyclic shifts.

The received sequence $Y(n)$ may include a synchronization sequence, e.g. as described above with respect to Figs. 2 to 11. However, the received sequence may be any other sequence that may be produced by cyclic shifts from a prototype sequence $Z_c(n)$. In one implementation the synchronization sequence may be based on a Narrowband Secondary Synchronization Signal (N-SSS) sequence, e.g. as described above with respect to Figs. 2 to 11. In one example, the N-SSS sequence may be transmitted every 20 ms in subframe number 9 of every even numbered radio frame.

In one exemplary implementation each prototype sequence $Z_c(n)$ may include a scrambled base sequence, where the base sequence is a Zadoff-Chu sequence, e.g. as described above with respect to Figs. 2 to 11. The predefined number $N_{uc}$ of base sequences $R_c(n)$ and the predefined number $N_{pc}$ of scrambling sequences $S_c(n)$ may be associated with a cell ID of a radio cell. Alternatively, the prototype sequence $Z_c(n)$ may include only a base sequence, where the base sequence is a Zadoff-Chu sequence. The predefined number $N_{Z_c}$ of prototype sequences $Z_c(n)$ may be associated with a cell ID of a radio cell.

The processor 1202 may be configured to detect the specific prototype sequence $\hat{Z}_c(n)$ and its cyclic shift $\hat{l}_q$ based on detecting a peak in an output of the inverse frequency transform of the (aliased) cross spectral densities. The processor 1202 may be configured to detect the specific prototype sequence $\hat{Z}_c(n)$ and its cyclic shift $\hat{l}_q$ based on detecting a peak in accumulated outputs of the inverse frequency transform of the (aliased) cross spectral densities. The inverse frequency transform may be based on a 4-point IFFT or 4-point IDFT, for example.

In one implementation, the predefined number $N_{u_c}$ of known base sequences $R_c(n)$ may be from a set of 126 base sequences, the predefined number $N_{p_c}$ of known scrambling sequences $S_c(n)$ may be from a set of 4 Hadamard sequences, and the predefined number $N_{l_q}$ of known cyclic shifts may be from a set of 4 cyclic shifts, e.g. as described above with respect to Figs. 2 to 11.

Alternatively, in one implementation, the predefined number $N_{Z_c}$ of known prototype sequences $Z_c(n)$ may be from a set of 504 prototype sequences, and the predefined number $N_{l_q}$ of known cyclic shifts may be from a set of 4 cyclic shifts, e.g. as described above with respect to Figs. 2 to 11.

The receiver 1201 may be configured to receive a radio signal comprising a plurality of Orthogonal Frequency Division Multiplex (OFDM) symbols carrying the received sequence $Y(n)$. The receiver 1201 may be configured to receive the received sequence $Y(n)$ in an oversampled version. In one implementation, the receiver 1201 may be configured to receive the received sequence $Y(n)$ at a bandwidth corresponding to a multiple of 15 kHz. The receiver 1201 may include a Narrowband Internet of Things (NB-IoT) receiver.

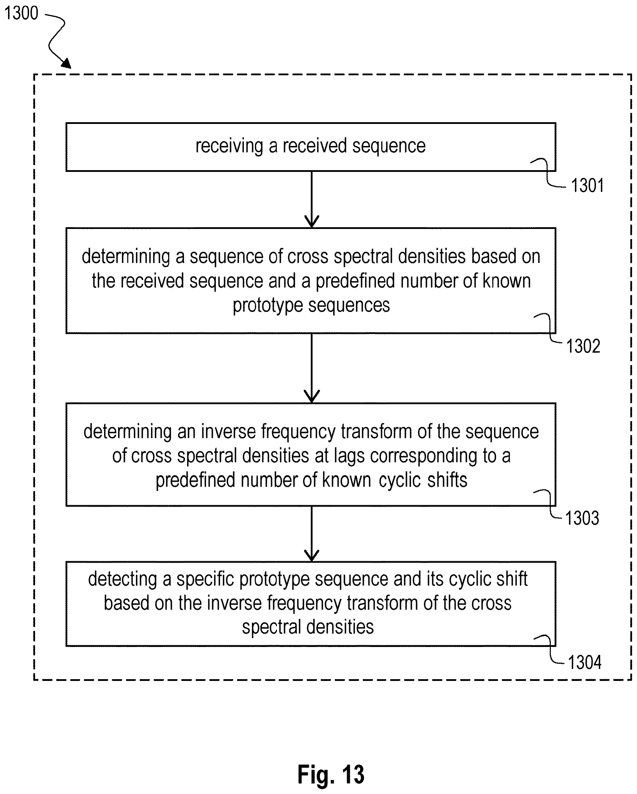

Fig. 13 is a schematic diagram of a method 1300 for detecting a specific prototype sequence and its cyclic shift according to the disclosure. The method 1300 includes receiving 1301 a received sequence, e.g. a received sequence $Y(n)$ as described above with respect to Figures 2 to 12. The method 1300 includes determining 1302 a sequence of cross spectral densities $S_{ZY}(n)$ based on the received sequence and a predefined number $N_{Z_c}$ of known prototype sequences $Z_c(n)$, e.g. as described above with respect to Figures 2 to 12. The method 1300 further includes determining 1303 an inverse frequency transform of the sequence of cross spectral densities $S_{ZY}(n)$ at lags corresponding to a predefined number $N_{l_q}$ of known cyclic shifts, e.g. as described above with respect to Figures 2 to 12. The method 1300 further includes detecting 1304 a specific prototype sequence $\hat{Z}_c(n)$ and its cyclic shift $\hat{l}_q$ based on the inverse frequency transform of the cross spectral densities $S_{ZY}(n)$, e.g. as described above with respect to Figures 2 to 12.

The predefined number $N_{l_q}$ of known cyclic shifts may be from a set of equidistant cyclic shifts. The method 1300 may further include determining the inverse frequency transform of the sequence of cross spectral densities only at the lags corresponding to the predefined number $N_{l_q}$ of known equidistant cyclic shifts, e.g. as described above with respect to Figures 2 to 12.

The received sequence $Y(n)$ may include a synchronization sequence. The synchronization sequence may be based on a Narrowband Secondary Synchronization Signal (N-SSS) sequence, e.g. as described above with respect to Figures 2 to 12. The N-SSS sequence may be transmitted every 20 ms in subframe number 9 of every even numbered radio frame.

In one example, each prototype sequence $Z_c(n)$ may include a scrambled base sequence, where the base sequence $R_c(n)$ may include a Zadoff-Chu sequence, e.g. as described above with respect to Figure 2. The predefined number $N_{u_c}$ of base sequences $R_c(n)$ and the predefined number $N_{p_c}$ of scrambling sequences $S_c(n)$ may be associated with a cell ID of a radio cell.

Alternatively, each prototype sequence $Z_c(n)$ may include only a Zadoff-Chu sequence. The predefined number $N_{Z_c}$ of prototype sequences $Z_c(n)$ may be associated with a cell ID of a radio cell.

The method 1300 may include detecting the specific prototype sequence $\hat{Z}_c(n)$ and its cyclic shift $\hat{l}_q$ based on detecting a peak in an output of the inverse frequency transform of the (aliased) cross spectral densities, e.g. as described above with respect to Figures 2 to 12. Alternatively, the method 1300 may include detecting the specific prototype sequence $\hat{Z}_c(n)$ and its cyclic shift $\hat{l}_q$ based on detecting a peak in accumulated outputs of the inverse frequency transform of the (aliased) cross spectral densities. In one example, the inverse frequency transform may be based on a 4-point IFFT or a 4-point IDFT.

In one exemplary implementation, the predefined number $N_{u_c}$ of known base sequences $R_c(n)$ may be from a set of 126 base sequences, the predefined number $N_{p_c}$ of known scrambling sequences $S_c(n)$ may be from a set of 4 scrambling sequences, and the predefined number $N_{l_q}$ of known cyclic shifts may be from a set of 4 cyclic shifts, e.g. as described above with respect to Figures 2 to 12.

In one alternative implementation, the predefined number $N_{Z_c}$ of known prototype sequences $Z_c(n)$ may be from a set of 504 prototype sequences, and the predefined number $N_{l_q}$ of known phase shifts may be from a set of 4 phase shifts, e.g. as described above with respect to Figs. 2 to 11.

The method 1300 may include receiving a radio signal comprising a plurality of Orthogonal Frequency Division Multiplex (OFDM) symbols carrying the received sequence $Y(n)$, e.g. as described above with respect to Figures 2 to 12. The method 1300 may include receiving the received sequence $Y(n)$ in an oversampled version. The method may include receiving the received sequence $Y(n)$ at a bandwidth corresponding to a multiple of 15 kHz, e.g. as described above with respect to Figures 2 to 12. The method 1300 may further include the functionality of the devices described above with respect to Figures 2 to 12. The method 1300 may be implemented with a mobile device, in particular a low-complexity correlation receiver as described above.

The methods, systems and devices described herein may be implemented as software in a Digital Signal Processor (DSP), in a micro-controller or in any other side-processor or as hardware circuit on a chip or within an application specific integrated circuit (ASIC).

Embodiments described in this disclosure can be implemented in digital electronic circuitry, or in computer hardware, firmware, software, or in combinations thereof, e.g. in available hardware of mobile devices or in new hardware dedicated for processing the methods described herein.

The present disclosure also supports a computer program product including computer executable code or computer executable instructions that, when executed, causes at least one computer to execute the performing and computing blocks described herein, in particular the method 1300 or the techniques described above with respect to Figs. 2 to 12. Such a computer program product may include a computer-readable non-transitory storage medium storing program code thereon for use by a processor, the program code comprising instructions for performing any of the method 1300 or the techniques as described above.

In addition, while a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it is understood that aspects of the disclosure may be implemented in discrete circuits, partially integrated circuits or fully integrated circuits or programming means. Also, the terms "exemplary", "for example" and "e.g." are merely meant as an example, rather than the best or optimal.

**Claims**

1. A detection device (1200) comprising:

    a receiver (1201) configured to receive a received sequence, wherein the received sequence is a Narrowband Secondary Synchronization Signal, N-SSS; and
    a processor (1202) configured to:

        descramble (B01) the received sequence with a predefined number of known scrambling sequences,
        determine (B02) a sequence of cross spectral densities based on the descrambled received sequence and a predefined number of known prototype sequences,
        demultiplex (B03) each of the cross spectral densities into four streams of the same length,
        accumulate (B04) the samples corresponding to each of the streams into four accumulated samples,
        multiplex (B05) the four accumulated samples to a sequence of aliased cross spectral densities,
        determine (B06) an inverse frequency transform of the sequence of aliased cross spectral densities at lags corresponding to a predefined number of known cyclic shifts, and
        detect (B07) a specific prototype sequence and its cyclic shift based on the inverse frequency transform of the aliased cross spectral densities.

2. The detection device (1200) of claim 1,
    wherein the specific prototype sequence is a base sequence which is scrambled with a scrambling sequence.

3. The detection device (1200) of claim 1 or 2,
    wherein the predefined number of known cyclic shifts are from a set of equidistant cyclic shifts.

4. The detection device (1200) of one of the preceding claims,
    wherein the processor (1202) is configured to determine (B06) the inverse frequency transform of the sequence of cross spectral densities only at the lags corresponding to the predefined number of known equidistant cyclic shifts.

5. The detection device (1200) of one of the preceding claims,
    wherein the N-SSS sequence is transmitted every 20 ms in subframe number 9 of every even numbered radio frame.

6. The detection device (1200) of one of the preceding claims,

    wherein each prototype sequence comprises a scrambled base sequence where the base sequence is a Zadoff-Chu sequence; or
    wherein each prototype sequence comprises a base sequence where the base sequence is a Zadoff-Chu sequence.

7. The detection device (1200) of one of the preceding claims,

wherein the predefined number of base sequences and the predefined number of scrambling sequences are associated with a cell ID of a radio cell; or
wherein the predefined number of base sequences are associated with a cell ID of a radio cell.

8. The detection device (1200) of one of the preceding claims, wherein the processor (1202) is configured to detect (B07) the specific prototype sequence and its cyclic shift based on detecting a peak in an output of the inverse frequency transform.

9. The detection device (1200) of one of claims 1 to 7, wherein the processor (1202) is configured to detect (B07) the specific prototype sequence and its cyclic shift based on detecting a peak in accumulated outputs of the inverse frequency transform.

10. The detection device (1200) of one of the preceding claims, wherein the inverse frequency transform is based on a 4-point IFFT or on a 4-point IDFT.

11. A method (1300) for detecting a specific prototype sequence, the method comprising:

receiving (1301) a received sequence, wherein the received sequence is a Narrowband Secondary Synchronization Signal, N-SSS;
descrambling the received sequence with a predefined number of known scrambling sequences;
determining (1302) a sequence of cross spectral densities based on the descrambled received sequence and a predefined number of known prototype sequences;
demultiplexing each of the cross spectral densities into four streams of the same length;
accumulating the samples corresponding to each of the streams into four accumulated samples;
multiplexing the four accumulated samples to a sequence of aliased cross spectral densities
determining (1303) an inverse frequency transform of the sequence of aliased cross spectral densities at lags corresponding to a predefined number of known cyclic shifts; and
detecting (1304) a specific prototype sequence and its cyclic shift based on the inverse frequency transform of the aliased cross spectral densities.

12. The method (1300) of claim 11, wherein the predefined number of known cyclic shifts are from a set of equidistant cyclic shifts.

13. A computer readable non-transitory medium on which computer instructions are stored which when executed by a computer cause the computer to perform the method of claim 11 or 12.

**Patentansprüche**

1. Detektionsvorrichtung (1200), die Folgendes umfasst:

einen Empfänger (1201), ausgelegt zum Empfangen einer empfangenen Folge, wobei die empfangene Folge ein Schmalband-Sekundärsynchronisationssignal, N-SSS, ist; und
einen Prozessor (1202), der zu Folgendem ausgelegt ist:

Entwürfeln (B01) der empfangenen Folge mit einer vordefinierten Anzahl bekannter Verwürfelungsfolgen,
Bestimmen (B02) einer Folge von Kreuzspektraldichten basierend auf der entwürfelten empfangenen Folge und einer vordefinierten Anzahl bekannter Prototypfolgen,
Demultiplexen (B03) jeder der Kreuzspektraldichten in vier Ströme gleicher Länge,
Akkumulieren (B04) der Samples, die jedem der Ströme entsprechen, zu vier akkumulierten Samples,
Multiplexen (B05) der vier akkumulierten Samples zu einer Folge von aliasierten Kreuzspektraldichten,
Bestimmen (B06) einer inversen Frequenztransformation der Folge aliasierter Kreuzspektraldichten an Nacheilpunkten, die einer vordefinierten Anzahl bekannter zyklischer Verschiebungen entsprechen, und
Detektieren (B07) einer spezifischen Prototypfolge und ihrer zyklischen Verschiebung basierend auf der inversen Frequenztransformation der aliasierten Kreuzspektraldichten.

2. Detektionsvorrichtung (1200) nach Anspruch 1,
wobei die spezifische Prototypfolge eine Basisfolge ist, die mit einer Verwürfelungsfolge verwürfelt ist.

3. Detektionsvorrichtung (1200) nach Anspruch 1 oder 2,
wobei die vordefinierte Anzahl bekannter zyklischer Verschiebungen aus einem Satz äquidistanter zyklischer Verschiebungen stammt.

4. Detektionsvorrichtung (1200) nach einem der vorhergehenden Ansprüche,
wobei der Prozessor (1202) dazu ausgelegt ist, die inverse Frequenztransformation der Folge von Kreuzspektraldichten nur an den Nacheilpunkten zu bestimmen (B06), die der vordefinierten Anzahl bekannter äquidistanter zyklischer Verschiebungen entsprechen.

5. Detektionsvorrichtung (1200) nach einem der vorhergehenden Ansprüche,
wobei die N-SSS-Folge alle 20 ms in Subframe Nummer 9 jedes geradzahligen Funkframes übertragen wird.

6. Detektionsvorrichtung (1200) nach einem der vorhergehenden Ansprüche,

wobei jede Prototypfolge eine verwürfelte Basisfolge umfasst, wobei die Basisfolge eine Zadoff-Chu-Folge ist; oder
wobei jede Prototypfolge eine Basisfolge umfasst, wobei die Basisfolge eine Zadoff-Chu-Folge ist.

7. Detektionsvorrichtung (1200) nach einem der vorhergehenden Ansprüche,

wobei die vordefinierte Anzahl von Basisfolgen und die vordefinierte Anzahl von Verwürfelungsfolgen mit einer Zellen-ID einer Funkzelle assoziiert sind; oder
wobei die vordefinierte Anzahl von Basisfolgen mit einer Zellen-ID einer Funkzelle assoziiert ist.

8. Detektionsvorrichtung (1200) nach einem der vorhergehenden Ansprüche,
wobei der Prozessor (1202) dazu ausgelegt ist, die spezifische Prototypfolge und ihre zyklische Verschiebung basierend auf dem Detektieren einer Spitze in einer Ausgabe der inversen Frequenztransformation zu detektieren (B07).

9. Detektionsvorrichtung (1200) nach einem der Ansprüche 1 bis 7,
wobei der Prozessor (1202) dazu ausgelegt ist, die spezifische Prototypfolge und ihre zyklische Verschiebung basierend auf dem Detektieren einer Spitze in akkumulierten Ausgaben der inversen Frequenztransformation zu detektieren (B07).

10. Detektionsvorrichtung (1200) nach einem der vorhergehenden Ansprüche,
wobei die inverse Frequenztransformation auf einer 4-Punkt-IFFT oder einer 4-Punkt-IDFT basiert.

11. Verfahren (1300) zum Detektieren einer spezifischen Prototypfolge, wobei das Verfahren Folgendes umfasst:

Empfangen (1301) einer empfangenen Folge, wobei die empfangene Folge ein Schmalband-Sekundärsynchronisationssignal, N-SSS, ist;
Entwürfeln der empfangenen Folge mit einer vordefinierten Anzahl bekannter Verwürfelungsfolgen;
Bestimmen (1302) einer Folge von Kreuzspektraldichten basierend auf der entwürfelten empfangenen Folge und einer vordefinierten Anzahl bekannter Prototypfolgen;
Demultiplexen jeder der Kreuzspektraldichten in vier Ströme gleicher Länge;
Akkumulieren der Samples, die jedem der Ströme entsprechen, zu vier akkumulierten Samples;
Multiplexen der vier akkumulierten Samples zu einer Folge von aliasierten Kreuzspektraldichten;
Bestimmen (1303) einer inversen Frequenztransformation der Folge aliasierter Kreuzspektraldichten an Nacheilpunkten, die einer vordefinierten Anzahl bekannter zyklischer Verschiebungen entsprechen; und
Detektieren (1304) einer spezifischen Prototypfolge und ihrer zyklischen Verschiebung basierend auf der inversen Frequenztransformation der aliasierten Kreuzspektraldichten.

12. Verfahren (1300) nach Anspruch 11,

wobei die vordefinierte Anzahl bekannter zyklischer Verschiebungen aus einem Satz äquidistanter zyklischer Verschiebungen stammt.

13. Computerlesbares nichtflüchtiges Medium, auf dem Computeranweisungen gespeichert sind, die bei Ausführung durch einen Computer bewirken, dass der Computer das Verfahren nach Anspruch 11 oder 12 durchführt.


**Revendications**

1. Dispositif de détection (1200) comprenant :

   un récepteur (1201) configuré pour recevoir une séquence reçue, dans lequel la séquence reçue est un signal de synchronisation secondaire en bande étroite, N-SSS ; et
   un processeur (1202) configuré pour :

   désembrouiller (B01) la séquence reçue avec un nombre prédéfini de séquences de brouillage connues,
   déterminer (B02) une séquence de densités interspectrales sur la base de la séquence reçue désembrouillée et d'un nombre prédéfini de séquences de prototype connues,
   démultiplexer (B03) chacune des densités interspectrales en quatre flux de la même longueur,
   cumuler (B04) les échantillons correspondant à chacun des flux en quatre échantillons cumulés,
   multiplexer (B05) les quatre échantillons cumulés en une séquence d'alias de densités interspectrales,
   déterminer (B06) une transformée de fréquence inverse de la séquence d'alias de densités interspectrales à des décalages correspondant à un nombre prédéfini de décalages cycliques connus, et
   détecter (B07) une séquence de prototype spécifique et son décalage cyclique sur la base de la transformée de fréquence inverse et des alias de densités interspectrales.

2. Dispositif de détection (1200) selon la revendication 1,
   dans lequel la séquence de prototype spécifique est une séquence de base qui est brouillée avec une séquence de brouillage.

3. Dispositif de détection (1200) selon l'une quelconque des revendications 1 ou 2,
   dans lequel le nombre prédéfini de décalages cycliques connus provient d'un ensemble de décalages cycliques équidistants.

4. Dispositif de détection (1200) selon l'une des revendications précédentes,
   dans lequel le processeur (1202) est configuré pour déterminer (B06) la transformée de fréquence inverse de la séquence d'alias de densités interspectrales uniquement aux décalages correspondant au nombre prédéfini de décalages cycliques connus.

5. Dispositif de détection (1200) selon l'une des revendications précédentes,
   dans lequel la séquence N-SSS est transmise toutes les 20 ms dans la sous-trame numéro 9 de chaque trame radio de numéro pair.

6. Dispositif de détection (1200) selon l'une des revendications précédentes,

   dans lequel chaque séquence de prototype comprend une séquence de base brouillée où la séquence de base est une séquence de Zadoff-Chu ; ou
   dans lequel chaque séquence de prototype comprend une séquence de base où la séquence de base est une séquence de Zadoff-Chu.

7. Dispositif de détection (1200) selon l'une des revendications précédentes,

   dans lequel le nombre prédéfini de séquences de base et le nombre prédéfini de séquences de brouillage sont associés à un ID de cellule d'une cellule radio ; ou
   dans lequel le nombre prédéfini de séquences de base est associé à un ID de cellule d'une cellule radio.

8. Dispositif de détection (1200) selon l'une des revendications précédentes,
   dans lequel le processeur (1202) est configuré pour détecter (B07) la séquence de prototype spécifique et son décalage cyclique sur la base de la détection d'un pic dans une sortie de la transformée de fréquence inverse.

9. Dispositif de détection (1200) selon l'une quelconque des revendications 1 à 7,
dans lequel le processeur (1202) est configuré pour détecter (B07) la séquence de prototype spécifique et son décalage cyclique sur la base de la détection d'un pic dans des sorties cumulées de la transformée de fréquence inverse.

10. Dispositif de détection (1200) selon l'une des revendications précédentes,
dans lequel la transformée de fréquence inverse est basée sur une IFFT à 4 points ou une IDFT à 4 points.

11. Procédé (1300) de détection d'une séquence de prototype spécifique, le procédé comprenant :

la réception (1301) d'une séquence reçue, dans lequel la séquence reçue est un signal de synchronisation secondaire en bande étroite, N-SSS ;
le désembrouillage de la séquence reçue avec un nombre prédéfini de séquences de brouillage connues ;
la détermination (1302) d'une séquence de densités interspectrales sur la base de la séquence reçue désembrouillée et d'un nombre prédéfini de séquences de prototype connues ;
le démultiplexage de chacune des densités interspectrales en quatre flux de la même longueur ;
le cumul des échantillons correspondant à chacun des flux en quatre échantillons cumulés ;
le multiplexage des quatre échantillons cumulés en une séquence d'alias de densités interspectrales ;
la détermination (1303) d'une transformée de fréquence inverse de la séquence d'alias de densités interspectrales à des décalages correspondant à un nombre prédéfini de décalages cycliques connus ; et
la détection (1304) d'une séquence de prototype spécifique et de son décalage cyclique sur la base de la transformée de fréquence inverse et des alias de densités interspectrales.

12. Procédé (1300) selon la revendication 11,
dans lequel le nombre prédéfini de décalages cycliques connus provient d'un ensemble de décalages cycliques équidistants.

13. Support non transitoire lisible par ordinateur sur lequel sont stockées des instructions d'ordinateur qui, à leur exécution par un ordinateur, amènent l'ordinateur à réaliser le procédé selon la revendication 11 ou 12.

100

110

111

N-PSS, N-SSS

120

Cell search

**Fig. 1**

EP 3 407 555 B1

**Fig. 2**

Fig. 3

Fig. 4

Fig. 5

Fig. 6

**Fig. 7**

Fig. 8a

**Fig. 8b**

**Fig. 9**

Fig. 10

Fig. 11

1200

Y(n)

1201

receiver

1202

processor

$\hat{Z}_c(n)$    $\hat{I}_q$

**Fig. 12**

1300

receiving a received sequence

1301

determining a sequence of cross spectral densities based on the received sequence and a predefined number of known prototype sequences

1302

determining an inverse frequency transform of the sequence of cross spectral densities at lags corresponding to a predefined number of known cyclic shifts

1303

detecting a specific prototype sequence and its cyclic shift based on the inverse frequency transform of the cross spectral densities

1304

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007136931 A1